**Europäisches Patentamt**

**European Patent Office**

**Office européen des brevets**

(11) Publication number : **0 489 477 A1**

(12) **EUROPEAN PATENT APPLICATION**

(21) Application number : **91203172.1**

(22) Date of filing : **05.12.91**

(51) Int. Cl.⁵ : **H05B 41/29**

(30) Priority : **05.12.90 NL 9002681**

(43) Date of publication of application :
**10.06.92 Bulletin 92/24**

(84) Designated Contracting States :
**DE FR GB NL**

(71) Applicant : **N.V. Nederlandsche
Apparatenfabriek NEDAP
Oude Winterswijkseweg 7
NL-7141 DE Groenlo (NL)**

(72) Inventor : **Hoeksma, Gerben Simon
Bargerkempke 5
NL-7103 DK Winterswijk (NL)**

(74) Representative : **Smulders, Theodorus A.H.J.,
Ir. et al
Vereenigde Octrooibureaux, Nieuwe Parklaan
97
NL-2587 BN Den Haag (NL)**

(54) **Operating circuit for gas discharge lamps.**

(57) An electronic high-frequency operating circuit for supplying two or more gas discharge lamps, comprising a mains rectifier ; a power factor correction circuit comprising a converter self-induction, a controllable power semiconductor with associated control circuit and a rectifier diode, followed by a smoothing capacitor ; and a push-pull stage controlled by a control signal, which stage converts the voltage on the smoothing capacitor into an alternating voltage which is supplied to each connected lamp via an associated series circuit of a self-induction and a resonance capacitor, while the series circuits formed by these self-inductions and resonance capacitor all have the same or substantially the same resonant frequency and the lamps are connected in parallel with the resonance capacitors and means are provided which prevent direct current flowing through the lamps, said operating circuit further comprising means which, upon activation of the operating circuit, set the frequency of the control signal for the push-pull stage at a value which is above the resonant frequency and subsequently lower it gradually to approximately the resonant frequency of the series circuits, as well as detection and regulating means for monitoring the lamp voltage and, if the lamp voltage of one or more lamps exceeds a predetermined time-dependent limit value, for regulating the frequency of the control signal in such a manner that the limit value is approximately maintained.

FIG 3

This invention relates to an electronic high-frequency operating circuit for supplying two or more gas discharge lamps, comprising a mains rectifier; a power factor correction circuit comprising a converter self-induction, a controllable power semiconductor with associated control circuit and a rectifier diode, followed by a smoothing capacitor; and a push-pull stage controlled by a control signal, which stage converts the voltage on the smoothing capacitor into an alternating voltage which is supplied to each connected lamp via an associated series circuit of a self-induction and a resonance capacitor, while the series circuits formed by these self-inductions and resonance capacitor all have the same or substantially the same resonant frequency and the lamps are connected in parallel with the resonance capacitors and means are provided which prevent direct current flowing through the lamps.

High-frequency operating circuits for gas discharge lamps give a high efficiency, flicker-free start and constant light without objectionable stroboscopic effects. Most high-frequency operating circuits which can be connected to the mains supply of the public electricity grid are of the self-oscillating type. An operating circuit that is frequently used in Europe is disclosed in EP-A-0,257,600. This known device comprises an input rectifier which may comprise a filter, which may or may not be active, to suppress higher harmonic mains currents (the so-called power factor correction circuit) and which supplies a smoothed DC voltage which is subsequently converted into a high-frequency AC voltage. This AC voltage is presented to an LC circuit while the lamp to be supplied is connected in parallel to the capacity of this circuit. Ignition occurs because the frequency of this high-frequency AC voltage is approximately equal to the resonant frequency of the LC circuit, so that the voltage across the LC circuit oscillates and the lamp is ignited. In normal operation, the LC circuit is damped and the AC voltage presented can lie at, below or above the resonant frequency. The height of the unloaded ignition voltage is generally not exactly fixed. For some applications, however, an exactly defined ignition voltage is required, as when applied in fittings of the so-called "ex"-classification, where in a given construction only limited voltage amplitudes are allowed to occur. If a plurality of gas discharge lamps are to be supplied, they can be connected in series or in parallel, as indicated in the data book "Siemens IC's für Industrielle Anwendungen, Datenbuch 1989/1990", page 242. In a series connection, if one of the lamps fails, the other lamps cannot burn anymore. In a parallel connection, the voltage across the circuit with the lamp that has not been ignited will oscillate high, which generally leads to unacceptably high loading of circuit components. For that reason, virtually all high-frequency operating circuits are cut off in this condition. See, for instance, the above-mentioned Datenbuch, page 242. This method gives a strong decrease of the light output and may wrongly give the impression that the operating circuit is out of order. Further, in most operating circuits, the ignition voltage is brought to a very great intensity directly or virtually directly, for instance within 1 msec of starting. Tests have shown that this leads to relatively fast degradation of the lamp electrodes, which limits the number of possible starts. Moreover, a more favourable loading of the lamp is obtained when the lamp voltage is increased gradually during an interval of, for instance, 10-100 msec until the lamps can ignite. It has been found that in that case the lamps will already ignite at a lower voltage. Further, in virtually all known electronic operating circuits, after the input stage which takes care of the so-called power factor correction, electrolytic smoothing capacitors are used. Electrolytic capacitors, however, have a limited life owing to the gradual diffusion of the electrolyte, are not very reliable and may even explode under certain circumstances, which is a drawback for fittings with an "ex" classification. Also, the electrolytic smoothing capacitors cause a relatively large inrush-current, especially when an active power factor correction is used, which means a heavy loading of the switches that switch on a group of lamps, and of the input rectifiers. By using film capacitors of relatively small capacity and a fairly high interstage circuit DC voltage, the drawback referred to can be obviated. In the case of an operating circuit for 2 x 36W lamps, a smoothing capacity of 3 microfarad may then be sufficient. However, in that case the ripple of the DC voltage becomes very large and the end stage of the operating circuit must then be capable of resisting relatively high DC voltages.

With fittings having an "ex" classification, relatively large variations in the ambient temperature of the fitting can occur, for instance between -20°C and +40°C.

It is known that the light intensity of a gas discharge lamp may become very low at low temperatures. This effect is further reinforced by the fact that at low tube temperatures, the operating voltage of the lamps is considerably lower, so that the power input diminishes. It is true that by creating a relatively high heat resistance of the lamp towards the surroundings, for instance by arranging a light-permeable protective lamp cover closely around the lamps, the heat resistance can be increased, so that the lamps themselves obtain a higher temperature, even at lower outside temperatures of, for instance, -20°C, but in that case the lamp temperature can become so high in the event of high ambient temperatures, that the lamps age rapidly. Moreover, the efficiency of the lamp decreases at high temperatures.

The object of the present invention is to remove the above-mentioned drawbacks.

A first object of the invention is to provide an operating circuit with which two or more gas discharge lamps without hot electrodes can be supplied from one high-frequency stage, while upon failure of one of the lamps, the other lamp or lamps continue to burn. When starting the lamp, the lamp voltage must then be gradually increased during a time interval of more than 10 milliseconds, up to an exactly defined maximum value and it must be possible to use film capacitors of relatively low capacity for smoothing the internal DC voltage.

A second object of the invention is to make such provisions that the gas discharge lamps used in a fitting of class "ex" still give a relatively large amount of light, even at a low ambient temperature of, for instance, -20°C, without the lamps becoming extremely hot if the ambient temperature is high.

The first object is realized by driving the push-pull stage used in the DC-AC converter with a variable frequency which is dependent on the voltage on the DC interstage circuit and by regulating the frequency at starting on the basis of the difference between measured lamp voltages and a time-dependent value of the desired output voltages. Further, the power factor correction circuit is so regulated that the ripple on the DC voltage interstage circuit becomes minimal, while yet the requirements regarding harmonic currents are met, as prescribed for instance in the standard VDE 0712.

The second object is realized by creating a relatively high heat resistance between the lamps and the surroundings by means of a heat-insulating cover.

At rated lamp output, the tube temperature may then be 30-50°C higher than the ambient temperature. In the case of a low ambient temperature, the operating frequency of the DC-AC voltage converter is made approximately equal to the resonant frequency of the LC circuits and the power factor correction circuit is so controlled that the DC voltage across the smoothing capacitor obtains a relatively high value. In the case of a high ambient temperature, the DC voltage across the smoothing capacity is maintained as low as is permissible in view of the correct operation of the power factor correction circuit and the operating frequency of the DC-AC converter is set above the resonant frequency of the TC circuits, for instance 1.1-1.3 times the resonant frequency. The value of the components in the LC circuits is so chosen that the damping of this circuit by the connected lamps during normal operation results in a quality factor Q of 0.4-2.

According to the invention, an operating circuit of the above-described type is characterized by means which, upon activation of the operating circuit, set the frequency of the control signal for the push-pull stage at a value which is above the resonant frequency and subsequently lower it gradually to approximately the resonant frequency of the series circuits and by detection and regulating means for monitoring the lamp voltage and, if the lamp voltage of one or more lamps exceeds a predetermined time-dependent limit value, for regulating the frequency of the control signal in such a manner that the limit value is approximately maintained.

The invention will now be further described, by way of example, with reference to the accompanying drawings of one embodiment.

Fig. 1 is a general block diagram of a high-frequency operating circuit for gas discharge lamps, such as frequently used with mains supply;

Fig. 2 plots the efficiency of a gas discharge lamp as a function of the lamp temperature;

Fig. 3 is a block diagram of one embodiment of an operating circuit according to the invention;

Fig. 4 is an embodiment of a regulating circuit for an operating circuit according to the invention;

Fig. 5 is an embodiment of a power factor correction circuit for an operating circuit according to the invention;

Fig. 6 shows waveforms associated with the circuit of Fig. 5.

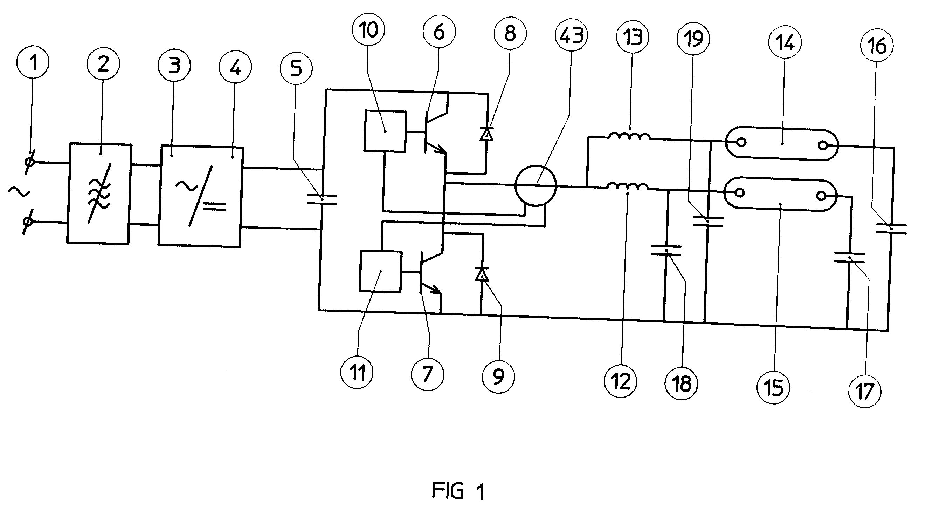

Fig. 1 shows the general configuration of a high-frequency operating circuit for connection to an AC mains voltage. The input AC voltage is applied to terminals 1 and passes a high-frequency blocking filter 2 and is subsequently rectified in a rectifier 3. A power factor correction circuit 4 which is connected to the output of the rectifier 3 ensures that the requirements regarding harmonic mains currents are met. Connected to a smoothing capacitor 5 is a push-pull stage which may for instance comprise transistors 6 and 7, free-running diodes 8 and 9 and control circuits 10 and 11 for the transistors. The AC voltage provided by the push-pull stage is applied to gas discharge lamps 14 and 15 via coils 12 and 13. The DC voltage component is blocked by capacitors 16 and 17 and the resonance capacitors 18 and 19 enable the starting of the lamps by oscillation of the voltage across the series resonant circuits formed by the coil 12 and capacitor 18, and coil 13 and capacitor 19. In this example, the control circuits 10 and 11 are supplied from a current transformer 43, which is included in the output line of the push-pull stage.

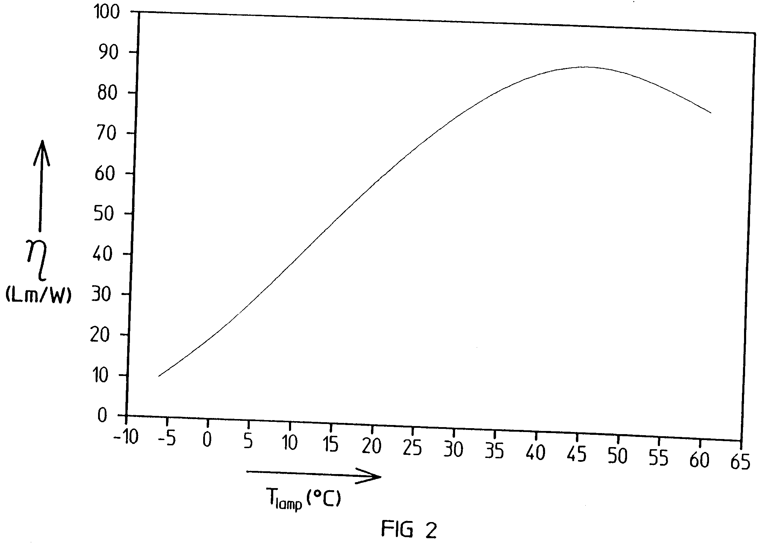

Fig. 2 plots temperature against efficiency of the conversion of the electric power which is supplied to a gas discharge lamp, in light, as measured on a commercially available gas discharge lamp (36W, section 26 mm, L-type). It is clear that the efficiency shows a marked decrease at lamp temperatures below 30°C and above 60°C and that the efficiency at a lamp temperature of 0°C is only one-fifth the efficiency at a lamp temperature of 45°C.

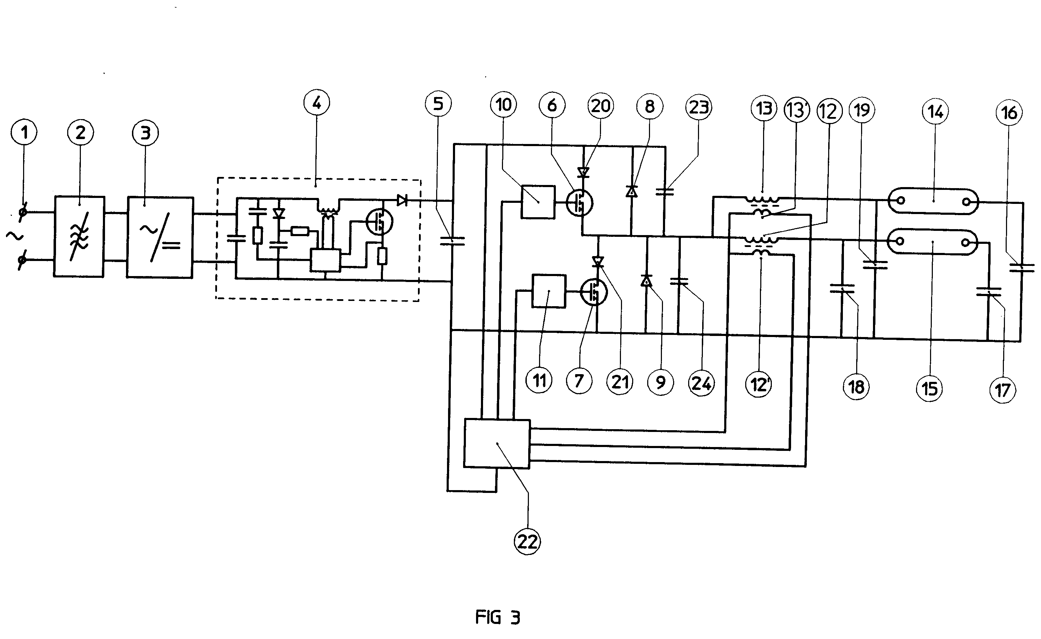

Fig. 3 shows a block diagram of an example of an operating circuit according to the invention. The block diagram of the input stage corresponds to that of Fig. 1 and the blocks 2, 3, and 4 have the above-described functions. In this example, the push-pull stage comprises MOSFET transistors 6 and 7, free-running diodes 8 and 9, control circuits 10 and 11 and blocking diodes 20 and 21 which ensure that the MOSFET transistors do not become inversely conductive. Further, snubber capacitors 23 and 24 ensure low switching losses in the MOSFET transistors referred to. An external regulating circuit 22 generates the control signals for the control circuits 10 and 11. The other components (12-19) have the same function as described above with reference to the block diagram of Fig. 1.

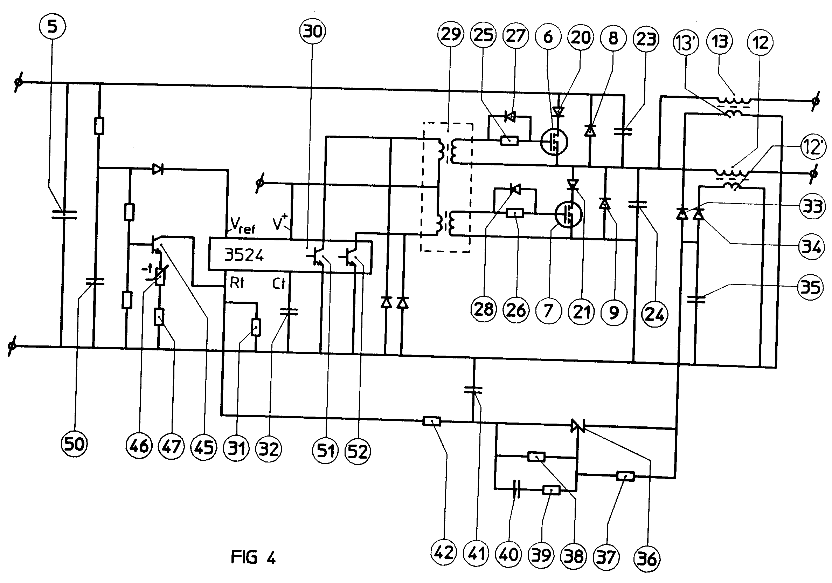

Fig. 4 shows an embodiment of a regulating circuit for the push-pull stage. The heart of the circuit is formed by an IC type 3524, indicated at 30, which can provide an oscillation frequency, settable by means of a resistor 31 and a capacitor 32, of approximately double the resonant frequency of circuits 12, 18 and 13, 19. Immediately after starting, terminal $V^+$ of IC 30 receives supply voltage via an auxiliary circuit (not shown), so that the IC begins to operate. Before the start, $V_{ref}$ is low, so that a capacitor 50 connected in parallel with the capacitor 5 is discharged. As a result, transistor 45 cannot become conductive. Further, a capacitor 41 connected to the connection $R_t$ of IC 30 is discharged, so that directly after the start a resistor 42 connected in series with capacitor 41 draws an additional current from the connection $R_t$ of IC 30. As a result, the oscillator formed by IC 30 begins to operate at a frequency more than double the value of the resonant frequency of the circuits 12, 18 and 13, 19. The flip flop incorporated in the IC 30 now alternately drives the transistors 51 and 52 incorporated in the IC, so that via control transformer 29 and resistor diode networks 25, 27 and 26, 28 the MOSFET transistors 6 and 7 are driven at a frequency that is above the resonant frequency referred to. The time constant of RC network 42, 41 is of the order of 10 msec. According as capacitor 41 is charged further, the control frequency decreases to close to the resonant frequency referred to, due to the fact that the current via resistor 42 decreases. The voltage across the capacitors 18 and 19, and hence across lamps 14 and 15, has therefore initially a limited value due to the limited oscillation of LC circuits 12, 18 and 13, 19 as long as these are driven above the resonant frequency. When the control frequency approaches the resonant frequency, the voltages across the resonant circuits will oscillate strongly and the lamps will ignite in a normal situation. After some tens to hundreds of milliseconds have lapsed, capacitor 50 will have been recharged whereby the inverting stage 45, 46 supplies additional current, which is dependent on the DC voltage on smoothing capacitor 5, to the $R_t$ connection of IC 30. As a result, the frequency of the oscillator, and hence the frequency of the push-pull stage, is so influenced that the lamp current remains constant, even at strongly varying voltage on smoothing capacitor 5. In high-frequency operation the lamps can be regarded as ohmic resistors and the circuits 12, 15, 18 and 13, 14, 19, respectively, form, from the resonant frequency of the LC circuit, a high-frequency attenuating filter. With increasing input voltage on smoothing capacitor 5 there is also an increase in the amplitude of the AC voltage, which is generated by the push-pull stage, but by appropriately increasing the control frequency, it is yet possible by means of the above-mentioned filter action to keep the current through the lamps constant or substantially constant. A dimensioning example of an operating circuit according to the invention for 36W L-lamps (high-frequency power 32W) is given hereinafter. In stabilized operation, the voltage on smoothing capacitor 5 can vary between 300V and 580V. The control frequency is varied between the resonant frequency at 300V and 1.45 times the resonant frequency at 580V. The quality $Q=R/\sqrt{L/C}$ of the output circuits 12, 15, 18 and 13, 14, 19 is about 0.8. If one or both lamps do not start or do not start quickly, for instance in the case of extreme cold or severely aged or faulty lamps, the voltage across the resonant circuit will increase strongly when the control frequency approaches the resonant frequency. If now the output voltage of one or both outputs approaches the limit value of 660 $V_{eff}$ prescribed for classification "ex", the voltage generated by auxiliary windings 12', 13' of the coils 12 and 13 is so high that the DC voltage rectified by diodes 33 and/or 34 connected in series therewith, and smoothed by a capacitor 35, sets a limiting circuit 36 formed by IC type TL 431 into the conductive state. Although the lamp voltage is not directly measured via the auxiliary winding on the coils, this voltage is nevertheless a very good measure for the lamp voltage. In all situations where the circuit described here is to become operative, a higher lamp voltage also results in a higher voltage on the auxiliary winding. The limit value is here determined by the parallel connection of resistors 39 and 38 and the resistor 37 connected in series therewith, whereby the IC 36 becomes conductive for instance at a DC voltage of 20V. Via resistor 42 the oscillator frequency of IC 30 is now increased, so that the output voltage remains limited. When capacitor 40 is charged (the time constant of the network 38, 39, 40 is about 1-3 seconds) the limit value at which IC 36 becomes conductive decreases to about one-third of the original value, for instance 7V. After capacitor 40 has been charged, the voltage at which IC 36 starts to conduct has decreased to a value defined by the ratio of resistors 38 and 37. This means that if one or both lamps are faulty, the output voltage for the lamp remains limited at about 200 $V_{eff}$. Because the rated operating voltage is about 120 $V_{eff}$, the other lamp, if it is not faulty, will continue to burn, albeit slightly dimmed. At the same time, in this manner the currents in the push-pull stage and the self-heating of the coils 12 and 13 remain at an acceptable value.

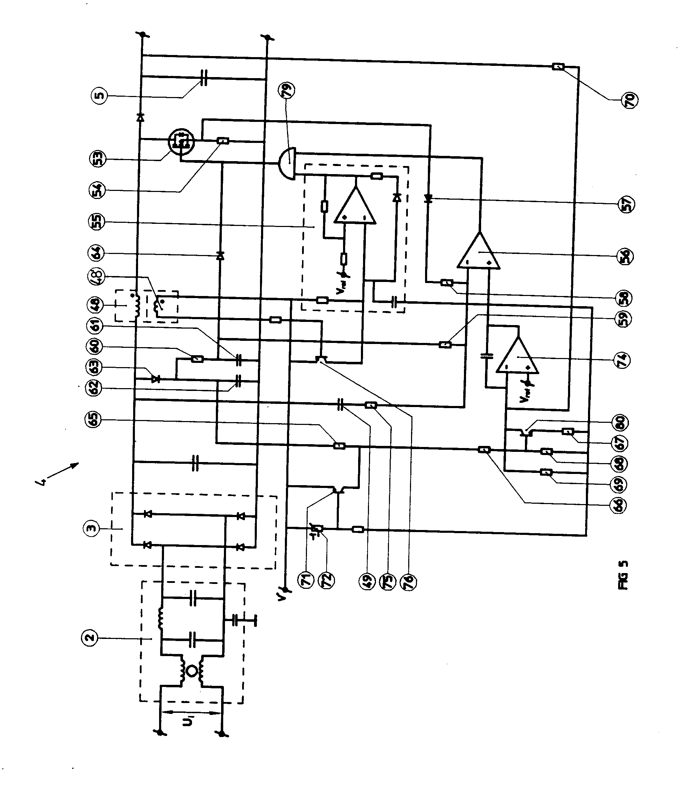

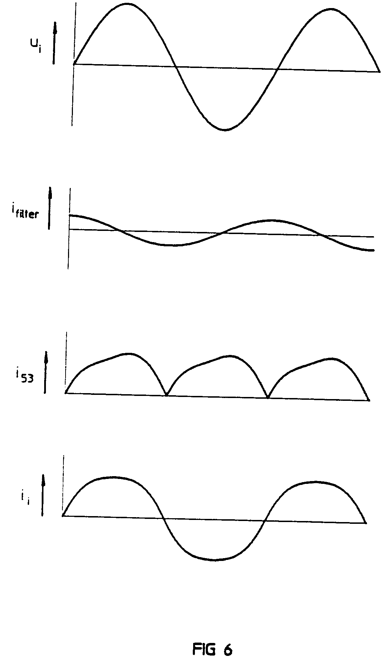

One embodiment of a power factor correction circuit for an operating circuit according to the invention is shown in Fig. 5. The corresponding current and voltage forms are shown in Fig. 6.

General operational principles of such circuits are known for instance from "Siemens IC's für Industrielle Anwendungen", Datenbuch 1989/1990, pp. 232-242. A controllable power semiconductor, such as MOSFET transistor 53, is periodically set into the conductive state by an AND gate 79, which receives signals from an oscillator 55 and a comparator 56. An auxiliary winding 48′ of a coil or converter self-induction 48 detects demagnetization of the coil and clears the oscillator, which was blocked during the demagnetization by means of a transistor 76. The output voltage of the oscillator 55 thereby increases and the MOSFET 53 can again be set into the conductive state. The current through the linear coil 48 then increases linearly with time from zero at a slope proportional to the instantaneous value of the rectified input voltage. Around the zero crossings of the input voltage, the duration of the conductive condition of MOSFET 53 is maintained constant at a value which is proportional to the output voltage of an integrator 74 and which is inversely proportional to the peak value of the input voltage. This occurs by a saw-tooth voltage which prevails across a capacitor 61. The capacitor 61 is charged via a resistor 60 from the pulsating DC voltage, rectified by a diode 63 and smoothed by a capacitor 62, on the output of rectifier 3. In this manner, it is accomplished that the slope of the sawtooth voltage across capacitor 61 is proportional to the peak value of the input AC voltage. Because the current increase in the coil 48 is proportional to the instantaneous value of the rectified input voltage and the current has a triangular form, it is in this manner accomplished that the average value of the current in the coil 48 is proportional to the absolute value of the instantaneous input voltage. Around the peaks of the mains voltage, the current through MOSFET 53 becomes largest. The voltage drop across a resistor 54 connected in series with the MOSFET then becomes so great that diode 57, which is connected between the terminal of the resistor 54 connected with the MOSFET and a resistor 58 connected to an input of the comparator 56, becomes conductive. The signal coming from the current measuring resistor 54 is now added via resistor 58 to the above-mentioned saw-tooth signal, which via a resistor 59 is supplied to the same input of the comparator, and thereby influences, via comparator 56, the moment of cut-off of MOSFET 53. At the same time, via a capacitor 49 and a resistor 75, a correction signal is presented to comparator 56 to compensate the capacitive input current of the filter. The comparing level for comparator 56 is supplied by an integrator 74, which compares a desired voltage value ($V_{ref}$) with an actual voltage value measured via a voltage divider 70, 69, which is connected with an output terminal of the circuit. A correction signal that depends on the peak value of the input voltage influences the height of the output voltage via a resistance network 65, 66, 67, 68 and a transistor 80 and via the integrator 74 and the comparator 56, in such a manner that the voltage on the capacitor 5 is at all times sufficiently higher (for instance at least 50V) than the input voltage, so that coil 48 can become properly demagnetized.

The resultant waveforms are outlined in Fig. 6. Because the current through coil 48 has a triangular course, the input current is equal to half the peak value of i-53. The input current is obtained from the vectorial composition of the capacitive RFI filter current and the average coil current i-53. The selected current form on the one hand meets the standards for mains contamination (harmonic currents) and on the other gives a lowest possible fluctuation in the power input during half a mains period, owing to the fact that around the zero crossings of the mains voltage a greater current and around the peaks of the mains voltage a smaller current is absorbed. Around the zero crossings the current strength is proportional to the instantaneous value of the input voltage, with a small correction for the capacitive input current of the filter. Adjacent the peaks of the mains voltage, the current is kept approximately constant, again with a small correction for the capacitive input current of the filter.

The temperature compensation operates as follows. At low temperatures, a transistor 71 becomes conductive owing to an NTC resistor 72 becoming high-ohmic. The result is that the measured value of the output voltage of the power factor correction circuit obtains an off-set, so that it sets the output voltage at the highest value independently of the input voltage, for instance at a direct voltage of 500V, with a ripple double the mains frequency of 150V total amplitude. Because at lower temperatures the NTC resistor 46 shown in Fig. 4 also becomes high-ohmic, the frequency of the push-pull stage is no longer controlled upwards. This means that in spite of the higher drying of the output circuit, which is the result of a low vapour pressure in the lamps (resulting in a low equivalent resistance in operation), yet a power is delivered to the lamps, which is not far below the power at room temperature. The lamps thereby heat up sufficiently to obtain a higher vapour pressure and hence a higher operating voltage, and hence to absorb more power. The lamps also heat up sufficiently to operate in a region where the lamp efficiency has a reasonable value (see Fig. 2). At extremely high temperatures, the frequency of the push-pull stage is controlled additionally upwards due to the fact that via the then low-ohmic NTC resistor 46 more current is delivered to terminal $R_t$, which additionally increases the oscillator frequency. Resistor 47 limits the maximum oscillator frequency.

For less demanding applications it is possible to do without influencing the frequency at which the push-pull stage is driven after the start. The voltage on the smoothing capacitors is then maintained at a constant value throughout the entire range of input voltages for which the operating circuit is designed. This value can optionally be increased at low ambient temperature. In that case, in Fig. 4 the components 45, 46, 47, and 50 and the associated resistors and capacitors are deleted and in Fig. 5 resistor 65 and, if temperature compensation is omitted, also components 71 and 72 are deleted.

Although the circuit described here operates with two lamps, it will be clear that it can be expanded to include an unlimited number of additional lamps by adding for each lamp a coil with auxiliary winding such as coil 13, an associated rectifier diode such as diode 33, a resonance capacitor such as capacitor 19 and an uncoupling capacitor such as capacitor 16. The uncoupling capacitors could in principle be shared, but it has been found that then in practice in certain operational conditions direct current discharges can occur in the lamps.

**Claims**

1. An electronic high-frequency operating circuit for supplying two or more gas discharge lamps, comprising a mains rectifier; a power factor correction circuit comprising a converter self-induction, a controllable power semiconductor with associated control circuit and a rectifier diode, followed by a smoothing capacitor; and a push-pull stage controlled by a control signal, which stage converts the voltage on the smoothing capacitor into an alternating voltage which is supplied to each connected lamp via an associated series circuit of a self-induction and a resonance capacitor, while the series circuits formed by these self-inductions and resonance capacitor all have the same or substantially the same resonant frequency and the lamps are connected in parallel with the resonance capacitors and means are provided which prevent direct current flowing through the lamps, characterized by means which, upon activation of the operating circuit, set the frequency of the control signal for the push-pull stage at a value which is above the resonant frequency and subsequently lower it gradually to approximately the resonant frequency of the series circuits and by detection and regulating means for monitoring the lamp voltage and, if the lamp voltage of one or more lamps exceeds a predetermined time-dependent limit value, for regulating the frequency of the control signal in such a manner that the limit value is approximately maintained.

2. An electronic high-frequency operating circuit according to claim 1, characterized in that the control signal for the push-pull stage is provided by a controllable oscillator circuit which, from a time after the start determined by a time-constant circuit, is so controlled that a higher voltage on the smoothing capacitor results in a higher frequency of the control signal.

3. An electronic high-frequency operating circuit according to claim 1 or 2, characterized in that each of the lamp voltages is detected by means of auxiliary windings of the self-inductions of the series circuits, while the voltages prevailing across the auxiliary windings are rectified.

4. An electronic operating circuit according to claim 1, characterized in that one connection of each of the auxiliary windings of the self-inductions is connected in series with a diode and that the series connection of these auxiliary windings and diodes form a parallel circuit which is connected between a fixed reference potential on the one hand and the first correction of a time-dependent voltage reference circuit on the other, while the second connection of the time-dependent voltage reference circuit is corrected with a capacitor and the voltage across this capacitor influences the frequency of the control signal of the push-pull stage.

5. An electronic high-frequency operating circuit according to any one of the preceding claims, characterized by a plurality of temperature-sensitive elements which cause, at low ambient tempperature, the DC voltage which the power factor correction circuit delivers to the smoothing capacitor to be increased and the frequency of the control signal for the push-pull stage to be maintained close to the resonant frequency.

6. An electronic high-frequency operating circuit according to any one of the preceding claims, characterized by a temperature-sensitive element which causes the frequency of the control signal for the push-pull stage to be increased at very high ambient temperature relative to the frequency at room temperature.

7. An electronic high-frequency operating circuit according to any one of the preceding claims, characterized in that means are arranged which detect the demagnetized state of the converter self-induction and that the controllable power semiconductor of the power factor correction circuit is each time set into the conductive state after the converter self-induction has been entirely demagnetized or is set into the non-conductive state if a sum signal which is formed by addition of a signal increasing linearly with time, starting from the time when the controllable power semiconductor becomes conductive, and a signal which is a measure for the current strength through the controllable power semiconductor, exceeds a predetermined limit value.

8. An electronic high-frequency operating circuit according to claim 7, characterized in that the controllable power semiconductor is set into the non-conductive state if a sum signal formed by the addition of a signal increasing linearly with time, starting at zero when the controllable power semiconductor becomes conductive, a signal derived from the rectified input voltage via a differentiating capacitor, and a signal which is a measure for the current through the controllable power semiconductor, exceeds a predetermined limit value.

9. An electronic high-frequency operating circuit according to claim 7 or 8, characterized in that the slope of said signal increasing linearly with time is proportional to the peak value of the input AC voltage.

10. An electronic high-frequency operating circuit according to claim 7, 8, or 9, characterized in that the predetermined limit value is determined by a regulator which provides an output signal which is dependent on the deviation between the desired and the actual voltage on the smoothing capacity.

11. An electronic high-frequency operating circuit according to any one of the preceding claims, comprising a plurality of lamps having a heat-insulating cover.

FIG 1

FIG 2

EP 0 489 477 A1

FIG 3

FIG 4

FIG 5

$U_i$

$i_{filter}$

$i_{53}$

$i_i$

FIG 6

European Patent
Office

# EUROPEAN SEARCH REPORT

Application Number

EP    91 20 3172

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 351 012 (PHILIPS) | 1 | H05B41/29 |
| Y | * column 3, line 33 - column 4, line 52; figures 1-6 * | 2-4,6, 7-10 | |
| Y | EP-A-0 311 424 (THOMAS INDUSTRIES) * abstract; figures 1,2 * | 2 | |
| Y | DE-A-3 432 266 (KNOBEL) * page 8, line 21 - page 11, line 11; figures 1-3 * | 3,4 | |
| Y | US-A-4 874 989 (NILSSEN) * column 5, line 24 - column 5, line 34; figures 1,2 * | 6 | |
| Y | SIEMENS COMPONENTS vol. 21, no. 3, June 1986, MUNCHEN pages 103 - 107; HERFURTH: 'tda 4814-Integrated circuit for sinusoidal consumption' * the whole document * | 7-10 | TECHNICAL FIELDS SEARCHED (Int. Cl.5 ) |
| A | EP-A-0 391 383 (ZUMTOBEL) * abstract; figure 1 * | 6 | H05B |

-----

The present search report has been drawn up for all claims

| Place of search | Date of completion of the search | Examiner |
|---|---|---|
| THE HAGUE | 26 FEBRUARY 1992 | SPEISER P. |

EPO FORM 1503 03.82 (P0401)